# EUROPÄISCHE PATENTSCHRIFT

(11) **EP 2 142 776 B1**
(45) Veröffentlichungstag und Bekanntmachung des Hinweises auf die Patenterteilung: **23.01.2013**
(21) Anmeldenummer: 08758414.0
(22) Anmeldetag: 08.05.2008
(51) Int. Cl.: F02B 37/00, F02B 37/10, F02B 39/04, F02B 39/08, F02B 33/34

(54) **ANTRIEBSSTRANG, INSBESONDERE FÜR KRAFTFAHRZEUGE**
DRIVE TRAIN, PARTICULARLY FOR MOTOR VEHICLES
CHAÎNE CINÉMATIQUE, EN PARTICULIER POUR VÉHICULES À MOTEUR

(30) Priorität: 08.05.2007 DE 102007022042
(43) Veröffentlichungstag der Anmeldung: 13.01.2010
(73) Patentinhaber: Voith Patent GmbH, 89522 Heidenheim (DE)
(72) Erfinder: KLEY, Markus, 73479 Ellwangen (DE); KÄMMERER, Steffen, 74564 Crailsheim (DE)
(74) Vertreter: Weitzel, Wolfgang
(86) Internationale Anmeldenummer: PCT/EP2008/003690
(87) Internationale Veröffentlichungsnummer: WO 2008/135288

(56) Entgegenhaltungen:
- DE-A1- 19 924 918
- DE-B- 1 027 941
- DE-C- 859 238
- DE-C1- 4 429 855
- GB-A- 206 845
- GB-A- 820 096
- GB-A- 856 788
- SU-A1- 1 332 051
- US-A- 2 585 968

## Beschreibung

Die vorliegende Erfindung betrifft einen Antriebsstrang, insbesondere Kraftfahrzeugantriebsstrang, mit einem aufgeladenen Verbrennungsmotor. Unter Aufladung eines Verbrennungsmotors versteht man dabei das Vorsehen eines sogenannten Turboladers, umfassend eine Abgasturbine im Abgasstrom des Verbrennungsmotors und einen Verdichter in einem zu dem Verbrennungsmotor führenden Luftkanal, wobei der Verdichter mittels der Abgasturbine angetrieben wird, indem die Letztere dem Abgas Energie entzieht, und der Verdichter Luft, die für die Verbrennung des Kraftstoffs im Verbrennungsmotor aus der Umgebung angesaugt und dem Verbrennungsmotor zugeführt wird, vorverdichtet.

Solche Antriebsstränge mit aufgeladenen Verbrennungsmotoren sind in zahlreichen Ausführungsformen bekannt. Bei manchen Ausführungsformen werden zwei Abgasturbolader vorgesehen, das heißt mit zwei parallel oder seriell zueinander geschaltete Abgasturbinen, die jeweils einen Verdichter für Luft für den Verbrennungsmotor antreiben.

Ferner sind sogenannte Turbo-Compound-Systeme bekannt, bei welchen mit einer Abgasturbine, dann in der Regel Abgasnutzturbine genannt, dem Abgas des Verbrennungsmotors Energie entzogen wird, in Antriebsleistung umgewandelt wird und über eine Triebverbindung, in welcher eine hydrodynamische Kupplung angeordnet sein kann, der Abtriebswelle, insbesondere Kurbelwelle des Verbrennungsmotors zugeführt wird. Die Abgasnutzturbine ist dabei in der Regel in Strömungsrichtung im Abgas hinter der Abgasturbine des Turboladers angeordnet und zwischen den beiden Systemen - Turbolader und Turbo-Compound - besteht keine mechanische Verbindung.

Die bekannten Systeme weisen, obwohl sie bereits ein deutlich kraftstoffoptimiertes Fahren eines Kraftfahrzeugs in verschiedenen Geschwindigkeits- und Drehzahlbereichen ermöglichen, gewisse Nachteile auf. So weisen Turboladersysteme bekanntlich in Betriebszuständen mit einem geringen Abgasstrom, das heißt bei niedrigen Drehzahlen des Verbrennungsmotors, ein sogenanntes Turboloch auf. Turbo-Compound-Systeme hingegen werden in der Regel zusätzlich zu Turboladersystemen eingesetzt und erhöhen dadurch die Komplexität und Teileanzahl des Antriebsstrangs. Ferner stehen der Abgasnutzturbine nur jene Energieanteile im Abgasstrom zur Verfügung, welche dem Abgasstrom nicht bereits zuvor durch die Abgasturbine des Turboladers entzogen wurden. Schließlich haben die Turbo-Compound-Systeme keinen signifikanten Einfluss auf die gewünschte Vermeidung des Turbolochs.

Das Dokument JP62195420 beschreibt einen Antriebsstrang mit einem von einem Verbrennungsmotor angetriebenen Generator. Die Abtriebswelle des Verbrennungsmotors steht über eine hydrodynamische Kupplung und ein Schaltgetriebe in einer Triebverbindung mit einer Turbolader-Verdichter-Einheit. Die Turbolader-Verdichter-Einheit weist eine Abgasturbine und einen Verdichter auf, die auf einer gemeinsame Welle angeordnet sind, wobei die Welle ferner ein Zahnrad des Schaltgetriebes trägt. Die Abgasturbine wird mit Abgas aus dem Verbrennungsmotor beaufschlagt, welches zusätzlich mit einem Brenner aufheizbar ist. Der Verdichter lädt den Verbrennungsmotor auf, indem er Frischluft verdichtet und dem Verbrennungsmotor über einen Ladeluftkühler zuführt.

Die Offenlegungsschrift DE 10 2004 029 828 A1 beschreibt einen Abgasturbolader für eine Brennkraftmaschine mit einem Verdichter und einer Turbine, wobei der Verdichter und die Turbine über eine Welle drehfest verbunden sind. Koaxial und in einer Triebverbindung mit der Turboladerwelle ist eine elektrische Maschine vorgesehen, die sowohl als Motor als auch als Generator betreibbar ist. Über ein Riemengetriebe oder ein Zahnradgetriebe ist die Turboladerwelle ferner mit der Abtriebswelle der Brennkraftmaschine verbunden.

Die Patentschrift De 10 2005 003 714 B4 beschreibt für ein Turbocompoundsystem einen über eine schaltbare Kupplung zuschaltbaren Verdichter. Die Kupplung kann als hydraulisch befüll- und entleerbare Kupplung ausgebildet sein. Zur Funktion ist es dringend notwendig, dass die erste Kupplungshälfte mit der Abgasturbine und die zweite Kupplungshälfte mit dem Verdichter verbunden ist.

DE 1027941B beschreibt den nächstgelegenen Stand der Technik.

Der Erfindung liegt die Aufgabe zugrunde, einen Antriebsstrang, insbesondere Kraftfahrzeugantriebsstrang, anzugeben, welcher hinsichtlich der Kraftstoffnutzung noch effizienter als die genannten Antriebsstränge arbeitet. Insbesondere sollen die genannten Probleme vermieden werden und vorteilhaft zudem das Auftreten eines Turbolochs eliminiert werden. Zugleich soll der Antriebsstrang hinsichtlich seines konstruktiven Aufbaus, insbesondere mit Bezug auf eine mechanische Leistungsübertragung und eine hydrodynamische Leistungsübertragung verbessert werden.

Die erfindungsgemäße Aufgabe wird durch einen Antriebsstrang mit den Merkmalen von Anspruch 1 gelöst. In den abhängigen Ansprüchen sind vorteilhafte und besonders zweckmäßige Ausgestaltungen der Erfindung angegeben.

Der erfindungsgemäße Antriebsstrang weist einen Verbrennungsmotor mit einer Abtriebswelle, insbesondere einer Kurbelwelle, auf. Im Abgasstrom des Verbrennungsmotors ist die Abgasturbine eines Turboladers angeordnet, im Frischluftstrom zu dem Verbrennungsmotor der Verdichter des Turboladers. Somit handelt es sich um einen sogenannten aufgeladenen Verbrennungsmotor.

Erfindungsgemäß steht die Abgasturbine zusätzlich in einer Triebverbindung mit einem Nebenaggregat des Antriebsstrangs, beispielsweise einer Pumpe, einem Lüfter, einem elektrischen Generator oder der Antriebswelle eines sonstigen Aggregats. Somit kann die Antriebsleistung der Abgasturbine nicht nur zum Antrieb des Verdichters genutzt werden, sondern auch zum Antrieb des wenigstens einen weiteren Nebenaggregats. Wenn es sich dabei um ein Nebenaggregat handelt, das in der Lage ist, selbst ein Antriebsmoment beziehungsweise Antriebsleistung, wenigstens in bestimmten Betriebszuständen, zur Verfügung zu stellen, beispielsweise ein elektrischer Generator, der auch motorisch betreibbar ist, so kann von dem Nebenaggregat Antriebsleistung auf die Abgasturbine und/oder, wenn eine Umgehung der Abgasturbine hinsichtlich des Leistungsflusses vorgesehen ist, auf den Verdichter übertragen werden, um das Auftreten eines Turbolochs zu vermeiden. In der Triebverbindung zwischen der Abgasturbine und dem Nebenaggregat ist eine hydrodynamische Kupplung angeordnet, insbesondere eine regelbare hydrodynamische Kupplung, die eine Drehschwingungsdämpfung bereitstellt und so die Abgasturbine, wenn beispielsweise ein Verdichter, insbesondere Kolbenverdichter, beispielsweise eines Kraftfahrzeugdruckluftsystems, als Nebenaggregat angetrieben wird, vor Drehschwingungen schützt. Die hydrodynamische Kupplung ist erfindungsgemäß zwischen die Abgasturbine und den Verdichter geschaltet, in anderen Worten zwischen der Abgasturbine und dem Verdichter angeordnet. Unter einer solchen Anordnung sind insbesondere Ausführungen zu verstehen, bei welchen der Antriebsleistungsfluss von der Abgasturbine über das Primärrad der hydrodynamischen Kupplung verläuft, insbesondere jedoch nicht über das Sekundärrad, oder bei welchen der entsprechende Antriebsleistungsfluss über ein drehfest an dem Primärrad der hydrodynamischen Kupplung angeschlossenen Drehelement, insbesondere Zahnrad oder Riemenscheibe, welches mit derselben Drehzahl wie das Primärrad umläuft und vorteilhaft mit diesem unmittelbar verbunden ist, einteilig ausgeführt ist oder auf einer gemeinsamen Welle getragen wird, führt.

Besonders vorteilhaft ist im Antriebsstrang ein sogenanntes Turbo-Compound-System vorgesehen, welches jedoch im Unterschied zu bekannten Ausführungen ohne zusätzliche Abgasturbine beziehungsweise Abgasnutzturbine auskommt. Bei dieser Ausführung der Erfindung erfolgt nämlich eine Einleitung von Antriebsleistung auf die Kurbelwelle, wobei die Antriebsleistung aus Abgasenergie gewonnen wird, von der Abgasturbine des Turboladers und nicht von einer zusätzlich zu der Turboladerabgasturbine vorgesehene Abgasnutzturbine, die im Abgasstrom hinter der Turboladerabgasturbine angeordnet ist. Im Sinne des zuvor dargestellten Grundgedankens der vorliegenden Erfindung ist bei diesem Ausführungsbeispiel die Abtriebswelle des Verbrennungsmotors beziehungsweise der Verbrennungsmotor selbst das Nebenaggregat, welches mittels der Abgasturbine zusätzlich zu dem Verdichter des Turboladers angetrieben wird.

Somit kann Antriebsleistung von der Abgasturbine des Turboladers wahlweise entweder ausschließlich auf den Verdichter des Turboladers oder die Abtriebswelle, insbesondere Kurbelwelle des Verbrennungsmotors übertragen werden. Alternativ oder zusätzlich ist auch eine Leistungsübertragung von Antriebsleistung der Abgasturbine des Turboladers gleichzeitig auf den Verdichter und die Abtriebswelle des Verbrennungsmotors möglich. Schließlich kann vorteilhaft, insbesondere in Betriebszuständen mit einem verhältnismäßig kleinen Abgasstrom, das heißt beispielsweise bei kleinen Drehzahlen des Verbrennungsmotors, bei welchen eine nur geringe Abgasmenge zur Verfügung steht, aufgrund der vorgesehenen Triebverbindung Antriebsleistung von der Kurbelwelle auf den Verdichter übertragen werden, so dass ein Turboloch vermieden werden kann.

Um eine Übertragung von Drehschwingungen von der Kurbelwelle beziehungsweise allgemein Abtriebswelle des Verbrennungsmotors auf die Abgasturbine zu vermeiden, ist in der Triebverbindung zwischen der Abtriebswelle und der Abgasturbine eine hydrodynamische Kupplung angeordnet. Eine solche hydrodynamische Kupplung weist ein beschaufeltes Primärrad, auch Pumpenrad genannt, und ein beschaufeltes Sekundärrad, auch Turbinenrad genannt, auf, welche miteinander einen mit einem Arbeitsmedium befüllbaren oder befüllten Arbeitsraum ausbilden, der insbesondere torusförmig ist. Wenn nun das Primärrad in Umlauf versetzt wird, beschleunigt es das Arbeitsmedium im Arbeitsraum radial nach außen, so dass sich ein Arbeitsmediumkreislauf im Arbeitsraum einstellt, mittels welchem Antriebsleistung beziehungsweise Drehmoment auf das Sekundärrad übertragen werden kann. Selbstverständlich ist es auch möglich, das Sekundärrad mechanisch anzutreiben, um mittels dem Arbeitsmediumkreislauf Antriebsleistung hydrodynamisch auf das Primärrad zu übertragen. Wenn das Primärrad in einer mechanischen Triebverbindung mit der Abgasturbine und dem Verdichter steht, und das Sekundärrad in einer mechanischen Triebverbindung mit der Abtriebswelle des Verbrennungsmotors steht, erfolgt eine hydrodynamische Leistungsübertragung vom Sekundärrad auf das Primärrad immer dann, wenn Antriebsleistung von der Abtriebswelle auf den Verdichter übertragen wird, wohingegen eine hydrodynamische Leistungsübertragung vom Primärrad auf das Sekundärrad immer dann erfolgt, wenn Antriebsleistung von der Abgasturbine auf die Abtriebswelle und/oder den Verdichter erfolgt. Auch bei dieser Ausführungsform ist die hydrodynamische Kupplung zwischen die Abgasturbine und den Verdichter geschaltet.

Die Triebverbindung zwischen der Abgasturbine und dem Verdichter ist vorzugsweise eine schlupffreie Verbindung, insbesondere eine ausschließlich mechanische Verbindung. Das Primärrad der hydrodynamischen Kupplung steht dann ebenfalls in einer mechanischen Verbindung mit der Abgasturbine und dem Verdichter und ist hinsichtlich des Leistungsflusses zwischen der Abgasturbine und dem Verdichter in der Triebverbindung angeordnet.

Die Abgasturbine, genauer deren Turbinenrad, das Primärrad und der Verdichter, genauer dessen Verdichterrad, können mit derselben Drehzahl umlaufen Zwischen dem Sekundärrad und der Abtriebswelle hingegen wird in der Regel eine drehzahlreduzierende Untersetzung vorgesehen sein, die beispielsweise über ein Zahnradgetriebe, insbesondere Stirnradgetriebe, ausgebildet werden kann.

Das Primärrad der hydrodynamischen Kupplung steht über ein erstes Getriebe in einer mechanischen Triebverbindung mit der Abgasturbine und über ein zweites Getriebe in einer mechanischen Triebverbindung mit dem Verdichter. Die Getriebe können beispielsweise als Zahnradgetriebe, insbesondere in Form jeweils einer einzigen Zahnradstufe, umfassend zwei Zahnräder, ausgeführt sein, oder beispielsweise auch als Riemengetriebe. Selbstverständlich sind andere mechanische Getriebeformen möglich.

Besonders vorteilhaft ist das Primärrad der hydrodynamischen Kupplung mit einem Zahnrad, insbesondere Außenzahnrad, verbunden oder trägt ein solches, insbesondere auf seinem äußeren Umfang. Das Zahnrad kämmt dann vorteilhaft mit einem ersten, der Abgasturbine zugeordneten Zahnrad und einem zweiten dem Verdichter zugeordneten Zahnrad. Beispielsweise kann das der Abgasturbine zugeordnete Zahnrad auf einer gemeinsamen Welle mit der Abgasturbine angeordnet sein, beziehungsweise integral mit der Abgasturbine ausgeführt sein. Entsprechend kann das zweite, dem Verdichter zugeordnete Zahnrad auf einer gemeinsamen Welle mit dem Verdichter angeordnet sein oder beispielsweise integral mit dem Verdichter ausgeführt sein. Unter Abgasturbine und Verdichter sind in diesem Fall die jeweiligen Laufräder dieser Komponenten zu verstehen. Selbstverständlich ist es auch möglich, eine andere Art von Getriebe entsprechend auszuführen. So kann beispielsweise das Primärrad der hydrodynamischen Kupplung mit einer Riemenscheibe verbunden sein oder eine solche tragen, insbesondere wiederum auf seinem äußeren Umfang. Die Riemenscheibe steht dann entsprechend über einen oder zwei Riemen in einer Triebverbindung mit einer der Abgasturbine zugeordneten Riemenscheibe und einer dem Verdichter zugeordneten Riemenscheibe. Das zu den Zahnrädern ausgeführte gilt analog.

Die Abgasturbine kann beispielsweise eine Radial-Axial-Turbine sein, das heißt, der Abgasstrom strömt radial von außen in die Abgasturbine ein und strömt in Axialrichtung der Abgasturbine von der Turbine ab. Hierzu ist insbesondere eine Spirale im Turbinengehäuse ausgebildet, welches dem Abgasstrom eine große Umfangskomponente aufprägt, so dass das Abgas im wesentlichen in Umfangsrichtung gerichtet auf das Turbinenrad auftrifft, dieses in eine Drehbewegung versetzt und in Axialrichtung der Drehachse des Turbinenrads umgelenkt wird und von dem Turbinenrad abströmt.

In besonderen Ausführungsformen ist es möglich, dass mittels der Abgasturbine des Turboladers nicht nur der Verdichter des Turboladers und die Kurbelwelle angetrieben werden, sondern ein zusätzliches Aggregat vorgesehen ist oder mehrere zusätzliche Aggregate vorgesehen sind, welches/welche mittels der Abgasturbine des Turboladers angetrieben wird/werden. Ein zusätzliches Aggregat kann beispielsweise ein Luftverdichter eines Kraftfahrzeugdruckluftsystems sein, welcher Druckluft in das Kraftfahrzeugdruckluftsystem einspeist. Ein anderes Aggregat kann eine Kühlwasserpumpe sein, die im Fahrzeugkühlkreislauf angeordnet ist, um das Kühlwasser (oder allgemein ein vorgegebenes Kühlmedium) im Fahrzeugkühlkreislauf umzuwälzen. Mit diesem Fahrzeugkühlkreislauf kann beispielsweise der Verbrennungsmotor und/oder die hydrodynamische Kupplung und/oder das Abgas gekühlt werden.

Um die Leistungsübertragung von der Abgasturbine des Turboladers auf die Abtriebswelle des Verbrennungsmotors und insbesondere von der Abtriebswelle auf den Verdichter des Turboladers gezielt steuern oder regeln zu können, ist in der Triebverbindung zwischen der Abgasturbine und der Kurbelwelle beziehungsweise zwischen der Kurbelwelle und dem Verdichter vorteilhaft ein leistungsregelbares oder leistungssteuerbares Übertragungselement vorgesehen, beispielsweise eine regelbare beziehungsweise steuerbare hydrodynamische Kupplung. Die Regelung beziehungsweise Steuerung der Leistungsübertragung in der hydrodynamischen Kupplung kann beispielsweise durch gezieltes Variieren des Füllungsgrads des Arbeitsraums der hydrodynamischen Kupplung erfolgen. Alternativ oder zusätzlich kann wenigstens ein Drosselelement, beispielsweise ein Drosselring oder eine Drosselscheibe, vorgesehen sein, das derart in den Arbeitsraum der hydrodynamischen Kupplung einbringbar ist, dass die Kreislaufströmung des Arbeitsmediums im Arbeitsraum durch dieses Drosselelement mehr oder minder gestört wird. Je stärker die Störung der Kreislaufströmung ist, desto geringer ist Leistungsübertragung beziehungsweise Drehmomentübertragung mittels der hydrodynamischen Kupplung.

Um die Steuerung beziehungsweise Regelung der Leistungsübertragung automatisch ausführen zu können, ist vorteilhaft eine Steuereinheit vorgesehen, die entsprechend mit der hydrodynamischen Kupplung und gegebenenfalls mit weiteren Aggregaten, beispielsweise der Abgasturbine oder weiteren Steuergeräten verschaltet ist. Mittels einer solchen Steuereinheit kann beispielsweise auch die Leistungsübertragung von der Abtriebswelle des Verbrennungsmotors auf den Verdichter des Turboladers eingestellt werden, um das Turboloch zu vermeiden. Insbesondere wird eine solche Leistungsübertragung mittels der Steuereinheit immer dann gezielt eingestellt, beispielsweise durch Ändern des Füllungsgrads des Arbeitsraumes oder Verschieben des Drosselelementes in der hydrodynamischen Kupplung, wenn ein relativ kleiner Abgasstrom vorhanden ist, mit welchem die Abgasturbine beaufschlagt wird, beispielsweise bei niedrigen Drehzahlen des Verbrennungsmotors. Alternativ erfolgt die Umkehr der Richtung der Leistungsübertragung in der hydrodynamischen Kupplung automatisch ohne Ändern von deren Leistungsübertragungsfähigkeit.

Durch das erfindungsgemäße System kann demnach eine sehr effektive und gezielte Ausnutzung von Abgasenergie zum Antrieb des Antriebsstrangs beziehungsweise des Kraftfahrzeugs erfolgen. Ein weiterer Vorteil liegt darin, dass im Gegensatz zu herkömmlichen Turbo-Compound-Systemen, bei welchen die zusätzliche Abgasnutzturbine, wenn diese über eine hydrodynamische Kupplung in einer Triebverbindung mit der Kurbelwelle stand, stets gegen Überdrehzahl geschützt werden musste, für den Fall, dass sich die hydrodynamische Kupplung vollständig entleert, ein solcher Überdrehzahlschutz aufgrund der vorgesehenen mechanischen Triebverbindung zwischen der Abgasturbine und dem Verdichter des Turboladers nicht mehr erforderlich ist. Selbstverständlich ist es auch möglich, die Abgasturbine, welche in einer Triebverbindung mit dem Turbolader und dem Nebenaggregat beziehungsweise der Abtriebswelle des Verbrennungsmotors, wobei hierunter auch eine Abtriebswelle eines am Verbrennungsmotor angeschlossenen Getriebes verstanden wird, steht, ein herkömmliches Turboladersystem vorzusehen, umfassend eine "eigene" Abgasturbine und einen "eigenen" Verdichter. Bei einem solchen System würde es sich dann um einen mehrstufig aufgeladenen Verbrennungsmotor handeln. Anstelle einer füllungsgesteuerten hydrodynamischen Kupplung in der Triebverbindung zwischen der Abgasturbine und der Abtriebswelle des Verbrennungsmotors kann auch eine konstant gefüllte hydrodynamische Kupplung vorgesehen sein, die über ein Drosselelement regelbar ist oder die nicht regelbar beziehungsweise steuerbar ist.

Die hydrodynamische Kupplung kann, insbesondere radial außen auf ihrem Sekundärrad, eine Verzahnung aufweisen, die mit einem von der Motorabtriebswelle getragenen oder in einer Triebverbindung mit der Motorabtriebswelle stehenden Zahnrad kämmt, um das oben dargestellte Getriebe zwischen dem Sekundärrad und der Abtriebswelle auszubilden. Alternativ kann ein solches Zahnrad auch auf einer mit dem Sekundärrad verbundenen, insbesondere das Sekundärrad tragenden Welle angeordnet sein, insbesondere in Axialrichtung außerhalb des Arbeitsraums der hydrodynamischen Kupplung. Bei einer direkten Lagerung oder einteiligen Ausführung nicht begenstand der Erfindung, des Turbinenrads der Abgasturbine, des Laufrads des Verdichters des Turboladers und des Primärrads auf einer gemeinsamen Welle beziehungsweise mit einer gemeinsamen Welle, kann das Sekundärrad beispielsweise auf dieser Welle relativ gelagert sein - insbesondere zwischen dem Laufrad des Verdichters und dem Primärrad -, das heißt zwar von der Welle getragen werden, jedoch nicht drehfest mit der Welle verbunden sein, durch Vorsehen wenigstens eines entsprechenden Gleitlagers und/oder Wälzlagers zwischen der Welle und dem Sekundärrad. Alternativ ist es erfindungsgemäβ möglich, das Sekundärrad in einem stehenden Gehäuse, welches insbesondere eine oder mehrere der Komponenten Turbinenrad des Turboladers, Primärrad, Sekundärrad und Laufrad des Verdichters umschließt, zu lagern. Alternative Lagerkonzepte sind vorstellbar.

Die Erfindung soll nachfolgend anhand von Ausführungsbeispielen und den Figuren exemplarisch beschrieben werden.

Es zeigen:
- Figur 1: Einen Antriebsstrang, welcher nicht Teil der Erfindung ist;
- Figur 2: Ein zweites Ausführungsbeispiel eines erfindungsgemäßen Antriebsstranges.

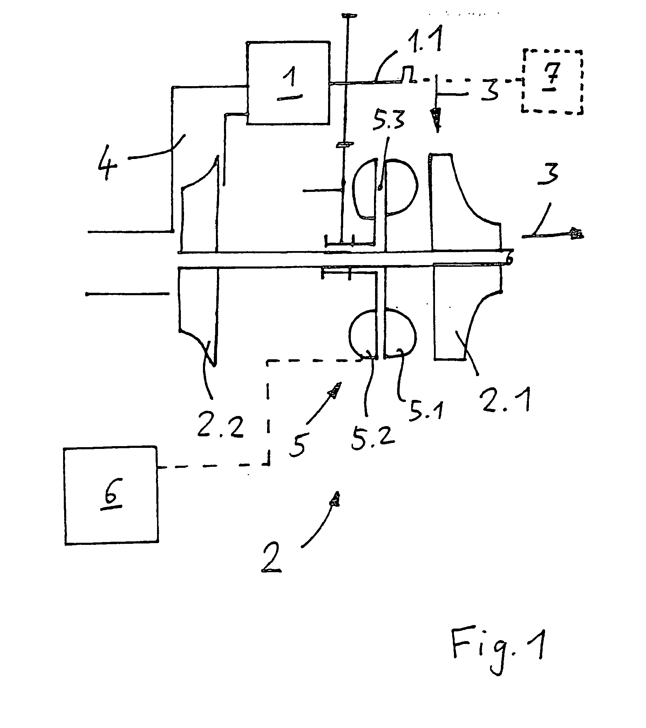

In der Figur 1 ist sehr schematisch ein Antriebsstrang mit einem Verbrennungsmotor 1, umfassend eine Abtriebswelle 1.1, dargestellt. Die Abtriebswelle 1.1, beispielsweise in Form einer Kurbelwelle, steht über ein hier nicht dargestelltes Getriebe in einer Triebverbindung mit Antriebsrädern (nicht dargestellt) des Kraftfahrzeugs, das von dem Verbrennungsmotor 1 beziehungsweise mittels dem Antriebsstrang angetrieben wird.

Der Verbrennungsmotor 1 erzeugt bei der Verbrennung von Treibstoff, der mit Luft aus einem Luftkanal 4 gemischt und gezündet wird, Abgas, siehe den schematisch dargestellten Abgasstrom 3. Die Luft in dem Luftkanal 4 wird durch den Verdichter 2.2 des Turboladers 2 vorverdichtet. Der Verdichter 2.2 wird mittels der Abgasturbine 2.1 im Abgasstrom 3 mit Abgasenergie angetrieben. Vorliegend ist die Abgasturbine 2.1 (beziehungsweise deren Turbinenrad) auf einer Welle drehfest angeordnet, die auch den Verdichter 2.2 (beziehungsweise das Verdichterrad desselben) drehfest trägt. Ferner trägt diese Welle das Primärrad 5.1 einer hydrodynamischen Kupplung 5, insbesondere ebenfalls drehfest.
Die hydrodynamische Kupplung 5 weist ein dem Primärrad 5.1 axial gegenüberstehendes Sekundärrad 5.2 auf, das auf der genannten Welle relativgelagert ist und mit dem Primärrad 5.1 einen torusförmigen Arbeitsraum 5.3 ausbildet. Somit ist die hydrodynamische Kupplung 5 zwischen der Abgasturbine 2.1 und dem Verdichter 2.2 angeordnet. Mittels Arbeitsmedium in dem Arbeitsraum 5.3 wird Antriebsleistung hydrodynamisch vom Primärrad 5.1 auf das Sekundärrad 5.2 oder in bestimmten Betriebszuständen auch andersherum übertragen. Somit kann Antriebsleistung von der Abgasturbine 2.1 über die hydrodynamische Kupplung 5 auf die Abtriebswelle 1.1 übertragen werden, oder von der Abtriebswelle 1.1 über die hydrodynamische Kupplung 5 auf den Verdichter 2.2 und/oder die Abgasturbine 2.1, wenn dies erwünscht ist.

Zur Steuerung der Leistungsübertragung ist eine Steuereinheit 6 vorgesehen, welche steuernd beziehungsweise regelnd mit der hydrodynamischen Kupplung 5 und gegebenenfalls weiteren Komponenten verbunden ist. Insbesondere steuert diese Steuereinheit 6 den Zulauf und/oder Ablauf von Arbeitsmedium in den Arbeitsraum 5.3 und/oder die Stellung eines in den Arbeitsraum 5.3 beziehungsweise die Kreislaufströmung von Arbeitsmedium im Arbeitsraum 5.3 einbringbaren Drosselelementes (nicht dargestellt).

Die Abtriebswelle 1.1 stellt bei dem in der Figur 1 gezeigten Antriebsstrang ein Nebenaggregat dar. Anstelle der Kurbelwelle 1.1 ist es erfindungsgemäβ jedoch auch möglich, ein anderes Nebenaggregat, beispielsweise einen elektrischen Generator, einen Klimakompressor oder einen Druckluftkompressor eines Kraftfahrzeugdruckluftsystems mittels der Abgasturbine 2.1 über die dargestellte Triebverbindung mit der hydrodynamischen Kupplung 5 anzutreiben. Nur rein schematisch ist ein solches Nebenaggregat in gestrichelten Linien dargestellt und mit der Bezugsziffer 7 bezeichnet.

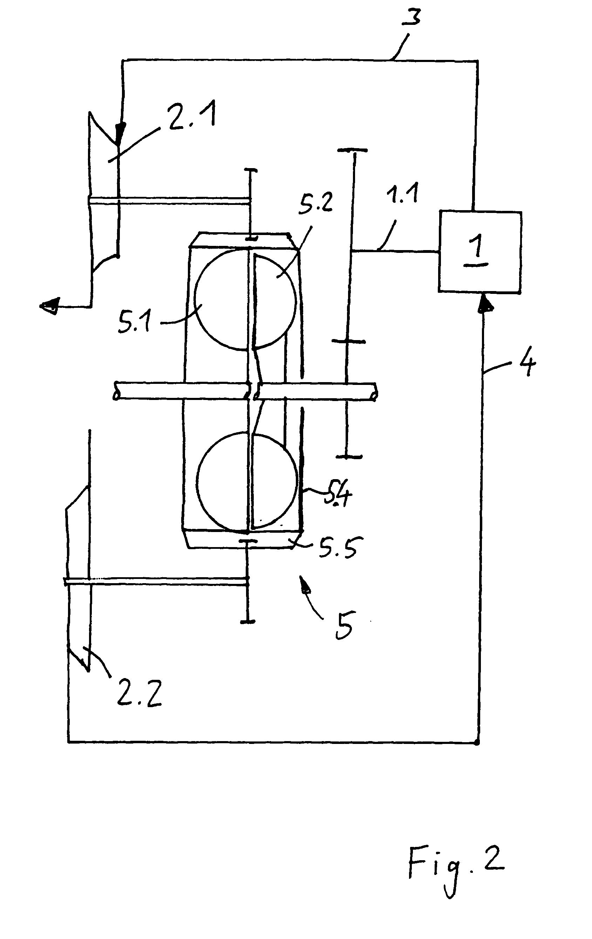

In der Figur 2 erkennt man die Erfindung, bei welcher die Abgasturbine 2.1 und der Verdichter 2.2 getrennt voneinander, hier jeweils auf einer eigenen Welle angeordnet sind. Die Triebverbindung zwischen der Abgasturbine 2.1 und dem Verdichter 2.2 wird über das Primärrad 5.1 der hydrodynamischen Kupplung 5 hergestellt, wobei es sich ebenfalls um eine rein mechanische Triebverbindung handelt. Vorliegend ist dabei das Primärrad 5.1 der hydrodynamische Kupplung 5 auf einer zusätzlich zu den Wellen der Abgasturbine 2.1 und des Verdichters 2.2 vorgesehenen Welle angeordnet.

Das Sekundärrad 5.2 der hydrodynamischen Kupplung 5 ist auf einer weiteren Welle angeordnet, die in einer mechanischen Triebverbindung mit der Abtriebswelle 1.1 des Verbrennungsmotors 1 steht, vorliegend über eine Untersetzung mit zwei Zahnrädern.

Bei dem gezeigten Ausführungsbeispiel trägt/tragen das Primärrad 5.1 und/oder die am Primärrad 5.1 angeschlossene Kupplungsschale 5.4, welche zusammen mit dem Primärrad 5.1 das Sekundärrad 5.2 umschließt, auf seinem/ihrem äußeren Umfang eine Verzahnung 5.5. Diese Verzahnung 5.5 kämmt mit dem der Abgasturbine 2.1 zugeordneten Zahnrad und dem dem Verdichter 2.2 zugeordneten Zahnrad.

Vorteilhaft weist das der Abgasturbine 2.1 zugeordnete Zahnrad denselben Außendurchmesser beziehungsweise denselben Wälzdurchmesser auf wie das dem Verdichter 2.2 zugeordnete Zahnrad. Hierdurch kann erreicht werden, dass die Übersetzung zwischen dem Primärrad 5.1 der hydrodynamischen Kupplung 5 und der Abgasturbine 2.1 dieselbe ist wie die Übersetzung zwischen dem Primärrad 5.1 und dem Verdichter 2.2, so dass der Verdichter 2.2 und die Abgasturbine 2.1 mit derselben Drehzahl umlaufen. Vorteilhaft weist die Verzahnung 5.5 einen größeren Durchmesser auf als die mit ihm kämmenden Zahnräder der Abgasturbine 2.1 und des Verdichters 2.2, so dass das Primärrad 5.1 der hydrodynamischen Kupplung 5 langsamer umläuft als die Abgasturbine 2.1 und der Verdichter 2.2.

Selbstverständlich ist es abweichend von der in der Figur 2 gezeigten Darstellung auch möglich, anstelle der Verzahnung 5.5 am äußeren Umfang der hydrodynamischen Kupplung 5 ein seitlich neben oder an der hydrodynamischen Kupplung 5 vorgesehenes Zahnrad vorzusehen, das zusammen mit dem Primärrad 5.1 umläuft. Auch andere Getriebe beispielsweise Riemengetriebe sind möglich.

## Patentansprüche

1. Antriebsstrang, insbesondere für Kraftfahrzeuge,
1.1 mit einem Verbrennungsmotor (1), umfassend eine Abtriebswelle (1.1);
1.2 mit einem Turbolader. (2), umfassend eine Abgasturbine (2.1), die im Abgasstrom (3) des Verbrennungsmotors (1) angeordnet ist, und einen von der Abgasturbine (2.1) angetriebenen Verdichter (2.2), welcher in einem zu dem Verbrennungsmotor (1) führenden Luftkanal (4) angeordnet ist, um Luft für den Verbrennungsmotor (1) zu verdichten; wobei
1.3 die Abgasturbine (2.1) zusätzlich in einer Triebverbindung mit einem Nebenaggregat (7) oder mit der Abtriebswelle (1.1) des Verbrennungsmotors (1) steht oder in eine solche schaltbar ist und Antriebsleistung wahlweise oder gleichzeitig von der Abgasturbine (2.1) auf den Verdichter (2.2) und das Nebenaggregat (7) oder die Abtriebswelle (1.1) überträgt; und
1.4 in der zusätzlich vorgesehenen Triebverbindung eine hydrodynamische Kupplung (5) angeordnet ist, umfassend ein beschaufeltes Primärrad (5.1) und ein beschaufeltes Sekundärrad (5.2), die miteinander einen Arbeitsraum (5.3) ausbilden, der mit einem Arbeitsmedium befüllbar oder befüllt ist, um Antriebsleistung hydrodynamisch vom Primärrad (5.1) auf das Sekundärrad (5.2) zu übertragen, und das Primärrad (5.1) in einer Triebverbindung mit der Abgasturbine (2.1) steht, und das Sekundärrad (5.2) in einer Triebverbindung mit dem Nebenaggregat (7) oder der Abtriebswelle (1.1) steht;
**dadurch gekennzeichnet, dass**
1.5 die hydrodynamische Kupplung (5) zwischen die Abgasturbine (2.1) und den Verdichter (2.2) geschaltet ist, indem das Primärrad (5.1) der hydrodynamischen Kupplung mechanisch mit einem Zahnrad verbunden ist oder ein solches trägt, welches mit einem ersten mit der Abgasturbine (2.1) umlaufenden Zahnrad und mit einem zweiten mit dem Verdichter (2.2) umlaufenden Zahnrad kämmt, so dass das Primärrad (5.1) der hydrodynamischen Kupplung (5) in einer mechanischen Triebverbindung mit der Abgasturbine (2.1) und dem Verdichter (2.2) steht.

2. Antriebsstrang gemäß Anspruch 1, **dadurch gekennzeichnet, dass** das Primärrad (5.1) der hydrodynamischen Kupplung (5) in demselben Übersetzungsverhältnis zu der Abgasturbine (2.1) und zu dem Verdichter (2.2) steht.

3. Antriebsstrang gemäß einem der Ansprüche 1 oder 2, **dadurch gekennzeichnet, dass** als Nebenaggregat (7) eines oder mehrere der folgenden Komponenten angetrieben wird:
- ein Lüfterrad, insbesondere des Kraftfahrzeugskühlsystems
- eine Pumpe
- ein zusätzlicher Verdichter, insbesondere Hubkolbenverdichter
- ein Druckluftkompressor eines Kraftfahrzeugdruckluftsystems
- ein elektrischer Generator, der insbesondere auch motorisch betreibbar ist
- ein Klimakompressor.

4. Antriebsstrang gemäß einem der Ansprüche 1 bis 3, **dadurch gekennzeichnet, dass** das Sekundärrad (5.2) in einer mechanischen Triebverbindung mit der Abtriebswelle (1.1) steht.

5. Antriebsstrang gemäß einem der Ansprüche 1 bis 4, **dadurch gekennzeichnet, dass** die Abtriebswelle (1.1) und das Sekundärrad (5.2) über ein Zahnradgetriebe, insbesondere Stirnradgetriebe, miteinander verbunden sind.

6. Antriebsstrang gemäß einem der Ansprüche 1 bis 5, **dadurch gekennzeichnet, dass** die Abgasturbine (2.1) eine Radial-Axial-Turbine ist.

7. Antriebsstrang gemäß einem der Ansprüche 1 bis 6, **dadurch gekennzeichnet, dass** wenigstens ein weiteres Aggregat, insbesondere ein Luftverdichter eines Kraftfahrzeugdruckluftsystems oder eine Kühlwasserpumpe, in einer Triebverbindung mit der Abgasturbine (2.1) steht oder in eine solche schaltbar ist, um von der Abgasturbine (2.1) angetrieben zu werden.

8. Antriebsstrang gemäß einem der Ansprüche 1 bis 7, **dadurch gekennzeichnet, dass** die hydrodynamische Kupplung (5) in ihrer Leistungsübertragung regelbar oder steuerbar ist, insbesondere durch gezieltes Variieren des Füllungsgrads des Arbeitsraums (5.3) mit Arbeitsmedium und/oder durch mehr oder minder starkes Stören einer Kreislaufströmung von Arbeitsmedium im Arbeitsraum (5.3) durch Einbringen eines Drosselelementes wie eines Drosselrings oder einer Drosselscheibe.

9. Antriebsstrang gemäß Anspruch 8, **dadurch gekennzeichnet, dass** eine Steuereinheit (6) vorgesehen ist, die mit der hydrodynamischen Kupplung (5) verschaltet ist, um die Leistungsübertragung mittels der hydrodynamischen Kupplung automatisch zu steuern oder zu regeln.

10. Antriebsstrang gemäß Anspruch 9, **dadurch gekennzeichnet, dass** die Steuereinheit (6) eingerichtet ist, um durch Steuern oder Regeln der hydrodynamischen Leistungsübertragung in der hydrodynamischen Kupplung (5) die von der Abgasturbine (2.1) auf das Primärrad (5.1) übertragene Antriebsleistung gezielt über das Sekundärrad (5.2) auf die Abtriebswelle (1.1) und mechanisch auf den Verdichter (2.2) aufzuteilen.

11. Antriebsstrang gemäß einem der Ansprüche 9 oder 10, **dadurch gekennzeichnet, dass** die Steuereinheit (6) eingerichtet ist, um durch Steuern oder Regeln der hydrodynamischen Leistungsübertragung in der hydrodynamischen Kupplung (5) in vorgegebenen Betriebszuständen mit einem relativ kleinen Abgasstrom (3) Antriebsleistung von der Abtriebswelle (1.1) über die hydrodynamische Kupplung (5) auf den Verdichter (2.2) zu übertragen.

12. Antrichsstrang gemäβ einem der Ansprüche 1 bis 11, **dadurch gekennzeichnet, dass** zusätzlich ein Turboladersystem vorgesehen ist, umfassend eine weitere Abgasturbine und einen weiteren Verdichter, um eine mehrstufige Aufladung des Verbrennungsmotors (1) auszubilden.

## Claims

1. A drivetrain, in particular for motor vehicles,
1.1 having an internal combustion engine (1), comprising an output shaft (1.1);
1.2 having a turbocharger (2), comprising an exhaust gas turbine (2.1), which is arranged in the exhaust gas flow (3) of the internal combustion engine (1), and a compressor (2.2), driven by the exhaust gas turbine (2.1), which is situated in an air channel (4) leading to the internal combustion engine (1) in order to compress air for the internal combustion engine (1);
1.3 the exhaust gas turbine (2.1) is additionally arranged in a drive connection with an auxiliary unit (7) or with the output shaft (1.1) of the internal combustion engine (1) or is switchable into such a connection, and alternately or simultaneously transmits drive power from the exhaust gas turbine (2.1) to the compressor (2.2) and the auxiliary unit (7) or the output shaft (1.1); and
1.4 a hydrodynamic coupling (5) being arranged in the additionally provided drive connection, comprising a bladed primary wheel (5.1) and a bladed secondary wheel (5.2), which together form a working chamber (5.3), which is fillable or filled with a working medium, in order to hydrodynamically transmit drive power from the primary wheel (5.1) to the secondary wheel (5.2), and the primary wheel (5.1) is arranged in a drive connection with the exhaust gas turbine (2.1), and the secondary wheel (5.2) is arranged in a drive connection with the auxiliary unit (7) or the output shaft (1.1);
**characterized in that**
1.5 the hydrodynamic coupling (5) is arranged between the exhaust gas turbine (2.1) and the compressor (2.2), **in that** the primary wheel (5.1) of the hydrodynamic coupling is mechanically connected to a gearwheel or carries such a gearwheel, which meshes with a first gearwheel revolving with the exhaust gas turbine (2.1) and a second gearwheel revolving with the compressor (2.2), so that the primary wheel (5.1) of the hydrodynamic coupling (5) is arranged in a mechanical drive connection with the exhaust gas turbine (2.1) and the compressor (2.2).

2. The drivetrain according to claim 1, **characterized in that** the primary wheel (5.1) of the hydrodynamic coupling (5) has the same transmission ratio to the exhaust gas turbine (2.1) and to the compressor (2.2).

3. The drivetrain according to one of claims 1 or 2, **characterized in that** one or more of the following components is driven as the auxiliary unit (7);
- a fan wheel, in particular of the motor vehicle cooling system
- a pump
- an additional compressor, in particular a stroke piston compressor
- a compressed air compressor of a motor vehicle compressed air system
- an electric generator, which can particularly also be driven by a motor
- an air-conditioning compressor.

4. The drivetrain according to one of claims 1 through 3, **characterized in that** the secondary wheel (5.2) is arranged in a mechanical drive connection with the output shaft (1.1).

5. The drivetrain according to one of claims 1 through 4, **characterized in that** the output shaft (1.1) and the secondary wheel (5.2) are connected to one another via a gearwheel transmission, in particular spur gearing.

6. The drivetrain according to one of claims 1 through 5, **characterized in that** the exhaust gas turbine (2.1) is a radial-axial turbine.

7. The drivetrain according to one of claims 1 through 6, **characterized in that** at least one further unit, in particular an air compressor of a motor vehicle compressed air system or a coolant water pump, is arranged in a drive connection to the exhaust gas turbine (2.1) or is switchable into such a connection, in order to be driven by the exhaust gas turbine (2.1).

8. The drivetrain according to one of claims 1 through 7, **characterized in that** the hydrodynamic coupling (5) can be regulated or controlled in its power transmission, in particular by selective variation of the degree of filling of the working chamber (5.3) with working medium and/or by more or less interference of a circulation flow of working medium in the working chamber (5.3) by introducing a throttle element such as a throttle ring or a throttle disk.

9. The drivetrain according to claim 8, **characterized in that** a control unit (6) is provided, which is connected with the hydrodynamic coupling (5), in order to automatically control or regulate the power transmission using the hydrodynamic coupling.

10. The drivetrain according to claim 9, **characterized in that** the control unit (6) is designed in order to split the drive power transmitted from the exhaust gas turbine (2.1) to the primary wheel (5.1) selectively via the secondary wheel (5.2) to the output shaft (1.1) and mechanically to the compressor (2.2) by controlling or regulating the hydrodynamic power transmission in the hydrodynamic coupling (5).

11. The drivetrain according to one of claims 9 or 10, **characterized in that** the control unit (6) is designed, in order to transmit drive power from the output shaft (1.1) via the hydrodynamic coupling (5) to the compressor (2.2) in predetermined operating states having a relatively small exhaust gas flow (3), by controlling or regulating the hydrodynamic power transmission in the hydrodynamic coupling (5).

12. The drivetrain according to one of claims 1 through 11, **characterized in that** additionally a turbo charger system is provided, comprising a further exhaust gas turbine and a further compressor in order to form a multi-stage charging of the internal combustion engine (1).

## Revendications

1. Train d'entraînement, en particulier pour véhicules motorisés,
1.1 avec un moteur à combustion (1), comprenant un arbre de sortie (1.1);
1.2 avec un compresseur turbo (2), comprenant une turbine de gaz d'échappement (2.1), qui est disposée dans le courant de gaz d'échappement (3) du moteur à combustion (1), et un compresseur (2.2) entraîné par la turbine de gaz d'échappement (2.1), qui est agencé dans un canal d'air (4) conduisant au moteur à combustion (1), pour comprimer l'air destiné au moteur à combustion (1); dans lequel
1.3 la turbine de gaz d'échappement (2.1) est en outre en liaison motrice avec un groupe auxiliaire (7) ou avec l'arbre de sortie (1.1) du moteur à combustion (1) ou peut être connectée ainsi, et transmet la puissance d'entraînement de manière sélective ou simultanément de la turbine de gaz d'échappement (2.1) au compresseur (2.2) et au groupe auxiliaire (7) ou à l'arbre de sortie (1.1); et
1.4 un accouplement hydrodynamique (5) est agencé dans la liaison motrice supplémentaire prévue, comportant une roue primaire à aubes (5.1) et une roue secondaire à aubes (5.2), qui forment ensemble une chambre de travail (5.3), qui peut se remplir ou bien se remplit avec un fluide de travail, pour transmettre la puissance d'entraînement de manière hydrodynamique de la roue primaire (5.1) à la roue secondaire (5.2), et la roue primaire (5.1) est en liaison motrice avec la turbine de gaz d'échappement (2.1), et la roue secondaire (5.2) est en liaison motrice avec le groupe auxiliaire (7) ou l'arbre de sortie (1.1);
**caractérisé en ce que**
1.5 l'accouplement hydrodynamique (5) est connecté entre la turbine de gaz d'échappement (2.1) et le compresseur (2.2), dans la mesure où la roue primaire (5.1) de l'accouplement hydrodynamique est connectée mécaniquement avec une roue dentée ou porte une telle roue dentée, qui s'engrène dans une première roue dentée tournant avec la turbine de gaz d'échappement (2.1) et une seconde roue dentée tournant avec le compresseur (2.2), de sorte que la roue primaire (5.1) de l'accouplement hydrodynamique (5) est en liaison motrice avec la turbine de gaz d'échappement (2.1) et le compresseur (2.2).

2. Train d'entraînement selon la revendication 1, **caractérisé en ce que** la roue primaire (5.1) de l'accouplement hydrodynamique (5) présente le même rapport de transmission avec la turbine de gaz d'échappement (2.1) et le compresseur (2.2).

3. Train d'entraînement selon l'une quelconque des revendications 1 à 2, **caractérisé en ce qu'**un ou plusieurs des composants suivants est(sont) entraîné(s) comme groupe auxiliaire (7):
- une roue de ventilateur, en particulier du circuit de refroidissement de véhicule automobile
- une pompe
- un compresseur supplémentaire, en particulier un compresseur à piston coulisse en un mouvement rectiligne alternatif
- un compresseur à air comprimé d'un système de compression d'air de véhicule automobile
- un générateur électrique, qui peut fonctionner notamment également à l'aide d'un moteur
- un compresseur de climatisation.

4. Train d'entraînement selon l'une quelconque des revendications 1 à 3, **caractérisé en ce que** la roue secondaire (5.2) est en liaison motrice avec l'arbre de sortie (1.1).

5. Train d'entraînement selon l'une quelconque des revendications 1 à 4, **caractérisé en ce que** l'arbre de sortie (1.1) et la roue secondaire (5.2) sont connectées ensembles par le biais d'une transmission à roues dentées.

6. Train d'entraînement selon l'une quelconque des revendications 1 à 5, **caractérisé en ce que** la turbine de gaz d'échappement (2.1) est une turbine radiale et axiale.

7. Train d'entraînement selon l'une quelconque des revendications 1 à 6, **caractérisé en ce qu'**au moins un autre groupe, en particulier un compresseur d'air d'un système de compression d'air de véhicule automobile ou bien une pompe à eau de refroidissement, est en liaison motrice avec la turbine de gaz d'échappement (2.1) ou bien peut être connecté ainsi, pour être entraîné par la turbine de gaz d'échappement (2.1).

8. Train d'entraînement selon l'une quelconque des revendications 1 à 7, **caractérisé en ce que** la transmission de puissance de l'accouplement hydrodynamique (5) est réglable ou commandable, en particulier en modifiant de manière ciblée le degré de remplissage de la chambre de travail (5.3) en fluide de travail et/ou en perturbant plus ou moins fortement un écoulement circulaire de fluide de travail dans la chambre de travail (5.3) par introduction d'un piège comme une bague d'étranglement ou une rondelle d'étranglement.

9. Train d'entraînement selon la revendication 8, **caractérisé en ce qu'**une unité de commande (6) est prévue, qui est connectée à l'accouplement hydrodynamique (5), pour commander ou réguler automatiquement la transmission de puissance à l'aide de l'accouplement hydrodynamique.

10. Train d'entraînement selon la revendication 9, **caractérisé en ce que** l'unité de commande (6) est configurée pour répartir par commande ou régulation de la transmission de puissance dans l'accouplement hydrodynamique (5) la puissance d'entraînement transmise de la turbine de gaz d'échappement (2.1) à la roue primaire avec précision par le biais de la roue secondaire (5.2) à l'arbre de sortie (1.1) et mécaniquement au compresseur (2.2).

11. Train d'entraînement selon l'une quelconque des revendications 9 à 10, **caractérisé en ce que** l'unité de commande (6) est configurée pour transmettre par commande ou régulation de la transmission de puissance dans l'accouplement hydrodynamique (5), dans des modes d'exploitation prédéterminés, la puissance d'entraînement avec un courant de gaz d'échappement relativement petit (3), de l'arbre de sortie (1.1) par le biais de l'accouplement hydrodynamique (5) au compresseur (2.2).

12. Train d'entraînement selon l'une quelconque des revendications 1 à 11, **caractérisé en ce qu'**un système de compresseur turbo est prévu en outre, comportant une autre turbine de gaz d'échappement et un autre compresseur, pour permettre le chargement du moteur à combustion (1) en plusieurs étages.
